## Europäisches Patentamt

## European Patent Office

## Office européen des brevets

(19)

(11) Veröffentlichungsnummer: **0 067 371**
**B1**

(12)

# EUROPÄISCHE PATENTSCHRIFT

(45) Veröffentlichungstag der Patentschrift:
**20.03.85**

(51) Int. Cl.⁴: **B 61 H  5/00,** F 16 D  65/02

(21) Anmeldenummer: **82104866.7**

(22) Anmeldetag: **03.06.82**

(54) **Aufhängevorrichtung für bewegliche Teile von insbesondere an Schienenfahrzeugen angeordneten Scheibenbremsen.**

(30) Priorität: **15.06.81  DE 3123640**

(43) Veröffentlichungstag der Anmeldung:
**22.12.82 Patentblatt 82/51**

(45) Bekanntmachung des Hinweises auf die Patenterteilung:
**20.03.85 Patentblatt 85/12**

(84) Benannte Vertragsstaaten:
**DE FR GB IT**

(56) Entgegenhaltungen:
**DE - A - 1 725 038**
**DE - A - 1 924 633**
**DE - B - 1 055 979**
**DE - B - 1 152 626**
**DE - B - 1 249 606**
**DE - B - 1 284 731**
**DE - C - 868 610**
**FR - A - 1 388 392**
**GB - A - 585 079**
**GB - A - 823 579**
**US - A - 2 627 322**
**US - A - 2 655 229**
**US - A - 3 258 089**

(73) Patentinhaber: **Knorr-Bremse GmbH, Moosacher Strasse 80, D-8000 München 40 (DE)**

(72) Erfinder: **Wirth, Xaver, Dr., Birkhuhnweg 18, D-8045 Ismaning (DE)**

ACTORUM AG

## Beschreibung

Die Erfindung betrifft eine Aufhängevorrichtung für betätigungs- und verschleissabhängig bewegliche Teile, insbesondere Bremsbelaghalter und unstarre Bremssättel, von insbesondere an Schienenfahrzeugen angeordneten, eine Verschleissnachstellvorrichtung aufweisenden Scheibenbremsen, mit wenigstens einer sich vom beweglichen Teil zu einem festen Halteteil erstreckenden Aufhängelasche, wobei die in Bewegungsrichtung des beweglichen Teiles elastisch verformbare Aufhängelasche an ihrem einen Ende am beweglichen Teil oder dem Halteteil starr befestigt ist.

Bei Scheibenbremsen von Schienenfahrzeugen ist es üblich, die durch das Bremsmoment bewirkten Bremskräfte von den Bremsbelaghaltern über im wesentlichen tangential zur Bremsscheibe verlaufende Aufhängelaschen auf den Fahrzeugrahmen zu übertragen.

Die DE-B-1 249 606 zeigt eine derartige, den eingangs genannten Merkmalen entsprechende Aufhängevorrichtung. Hierbei ist die Aufhängelasche an ihrem anderen, zweiten Ende ebenfalls starr am anderen Teil, dem Halteteil bzw. dem beweglichen Teil, befestigt. Die Anordnung ist mit dem Mangel behaftet, dass die ganze betätigungs- und verschleissabhängige Bewegung des beweglichen Teiles durch eine entsprechend grosse, S-förmige, elastische Verformung der Aufhängelasche aufgenommen werden muss, wodurch sich Begrenzungen von Verschleissstärken, beispielsweise der Dicke von Bremsbelägen, ergeben können.

Die DE-B-1 152 626 zeigt eine ähnliche Halterung eines Bremssattels mittels einer beidseitig starr eingespannten Blattfeder.

Aus der DE-B-1 284 731 ist es bekannt, einen Bremsbelag für eine Scheibenbremse mittels eines im wesentlichen radial verlaufenden Hebels zu halten, der einerseits starr mit dem Bemsbelag verbunden und andererseits drehbar und axialverschieblich mittels einer Buchse auf einem zur Bremsscheibe achsparallelen Bolzen gelagert ist. Der Hebel ist hierbei nicht elastisch verformbar, jede Brems- oder Verschleissbewegung des Bremsbelages führt zu einer Verschiebung der Buchse auf dem Bolzen; bei einer Verklemmung zwischen Buchse und Bolzen kann die Bremse ausfallen.

Um einem Schrägverschleiss der Bremsbeläge entgegenzuwirken, ist es gemäss DE-AS 1 780 451 bekannt, mittels der um ihre Längsachse drehsteif ausgebildeten Aufhängelasche den Bremsbelaghalter parallel zur Ebene der Bremsscheibe zu führen. Im Gegensatz hierzu ist es zum Erzielen einer gleichmässigen Flächenpressung des Bremsbelages auch bereits bekannt (DE-OS 2 213 321), die Aufhängelasche mittels eines Kugelgelenkes bzw. einer Gummi-Metall-Lagerung allseitig beweglich am Bremsbelaghalter anzulenken; der Bremshebel einer Bremszange greift dabei über ein Walzengelenk mit im wesentlichen zur Längsrichtung der Aufhängelasche paralleler Achsrichtung am Bremsbelaghalter an, wobei eine Feder den Bremszangenhebel und den Bremsbelaghalter gegeneinander verspannt.

Bei den bekannten, elastisch verformbare Aufhängelaschen aufweisenden Aufhängevorrichtungen beschreiben die Aufhängepunkte der Bremsbelaghalter bei Belagverschleiss Kreisbögen. Die dadurch verursachte Höhenverschiebung der Bremsbelaghalter wirkt sich nachteilig auf das Tragbild der Belaghaltergelenke aus, es führt zu Kantentragen. Weiterhin treten bei Neigung oder Achsversatz der Bremsscheibe zwischen linker und rechter Backe unterschiedliche Höhenverschiebungen auf, welche eine aufwendige Anlenkung der Zuspannvorrichtung erfordern und Biegemomente in der Bremsscheibe bewirken können. Zum Mildern der durch Abweichungen der Bremsscheibe aus ihrer Sollage bedingten Schwierigkeiten ist es bekannt, die Aufhängelaschen über einen waagebalkenartigen Ausgleichshebel am Fahrzeugrahmen anzulenken, diese Konstruktion ist jedoch teuer und aus Raumgründen oftmals nicht verwendbar.

Aus der FR-PS 1 388 392 ist eine kombinierte Verschleissnachstell- und Zentriervorrichtung bekannt, bei welcher die Enden von an den Bremsbelaghaltern angelenkten Bremszangenhebeln mittels einer im wesentlichen einem weiten U entsprechenden Feder miteinander verbunden sind, wobei sich vom Mittelabschnitt dieser Feder ein wesentlich weicheres Federblatt zu starren Befestigungsstellen erstreckt.

Aus der GB-A-585 079 ist es bekannt, bei einer durch eine Bremszange betätigbaren Scheibenbremse die Bremsbelaghalter mittels eines sphärischen Drucklagers gegen die Bremszangenhebel abzustützen und zusätzlich die Bremsbelaghalter und Bremszangenhebel in Belastungsrichtung der Drucklager wirkend mittels Druckfedern elastisch zu verspannen, wobei die Druckfedern zwischen den Bolzenköpfen von zur Bremsscheibe senkrechten, mit den Bremsbelaghaltern verbundenen, die Bremszangenhebel verschieblich durchsetzenden Bolzen und den Bremszangenhebeln eingespannt sind.

Für Scheibenbremsen mit unstarrem Bremssattel ist es bekannt, den Bremssattel auf sich zur Bremsscheibenachse parallel erstreckenden Bolzen verschieblich zu lagern. Der Bremssattel erfährt dabei bei jeder Zuspannung der Scheibenbremse eine Verschiebung und die Schiebeführung ist dementsprechend verschleissbehaftet.

Der Erfindung liegt die Aufgabe zugrunde, eine Aufhängevorrichtung der eingangs genannten Art derart auszugestalten, dass sie bei geringem, erforderlichen Einbauraum und geringem Bauaufwand eine gute Parallelführung der beweglichen Teile gewährleistet, bei Verschleiss der Bremsbeläge bzw. Versatz der Bremsscheibe einen Höhenversatz der beidseitigen, an eine Bremsscheibe anpressbaren Bremsbeläge vermeidet und zugleich im gelösten Zustand der Scheibenbremse ein beidseitig gleichmässiges Lüftspiel der Bremsbeläge sicherstellt. Aufgrund ihrer Führungseigenschaften soll die Aufhängevorrichtung auch dem Schrägverschleiss der Bremsbeläge entgegenwirken.

Diese Aufgabe wird nach der Erfindung dadurch gelöst, dass die Aufhängelasche an ihrem anderen Ende am jeweils anderen Teil — dem Halteteil bzw. dem beweglichen Teil — mittels einer parallel zur Bewegungsrichtung verlaufenden Schiebeführung gehaltert ist, wobei die Schiebeführung unter Kippmomentbelastung selbstsperrend ausgebildet ist.

Durch diese Ausbildung der Aufhängevorrichtung wird erreicht, dass während Bremsungen das bewegliche Teil den Brems- und gegebenenfalls Verschleisshub unter elastischer Verformung der Aufhängelasche ausführen kann, wobei sich die Schiebeführung unter dem durch die Verformung der Aufhängelasche ausgeübten Kippmoment sperrt und somit dem Hub nicht folgt. Zugleich bewirkt die Aufhängelasche eine Parallelführung des beweglichen Teiles, wodurch dem Schrägverschleiss der Bremsbeläge entgegengewirkt wird. Beim Lösen der Bremse federt die Aufhängelasche zurück, wobei das bewegliche Teil in seine Lösestellung zurückgeführt wird, die Bremsbeläge beidseitig der Bremsscheibe somit gleichmässig von der Bremsscheibe abgehoben werden. Während des Bremsvorganges aufgetretener Verschleiss der Bremsbeläge wird von der Verschleissnachstellvorrichtung kompensiert, der Gesamtlösehub der Scheibenbremse hierdurch also begrenzt. Während des nachfolgenden Betriebes mit gelösten Bremsen bewirken beispielsweise durch Fahrstösse bewirkte Erschütterungen eine derartige Verstellung der Schiebeführung, dass die Aufhängelasche jegliche elastische Verformung verliert und in ihren spannungslosen Zustand zurückkehrt.

Eine einfache und zweckmässige Ausgestaltung der Schiebeführung ergibt sich dadurch, dass die Schiebeführung als auf einem zylindrischen, parallel zur Bewegungsrichtung des beweglichen Teiles verlaufenden Bolzen verschieblich gelagerte Buchse ausgebildet ist, wobei die Länge der Buchse etwa dem Durchmesser des Bolzens entspricht.

Für Aufhängevorrichtungen, die für Bremsbelaghalter von mittels einer Bremszange zuspannbare Scheibenbremsen bestimmt sind, wobei ein Bremszangenhebel über ein Gelenk mit dem Bremsbelaghalter verbunden ist, ist es zweckmässig, wenn die Schiebeführung zwischen der Aufhängelasche und dem Halteteil angeordnet ist und wenn das Gelenk Rotationsfreiheitsgrade zumindest um eine zur Aufhängelasche und eine zum Bremszangenhebel parallel verlaufende Drehachse aufweist, wobei das Gelenk vorteilhaft als Doppelkugelgelenk mit zwei in Längsrichtung der Aufhängelasche zueinander versetzt angeordneten Einzelkugelgelenken ausgebildet ist. Durch diese Ausgestaltung wird erreicht, dass die Zuspannbewegungen des Bremszangenhebels über das Gelenk ohne Bewirken von Drehmomenten auf den Bremsbelaghalter übertragen werden, diese Zuspannbewegungen also keinen Schrägverschleiss bewirken können. Zugleich wirkt das Doppelkugelgelenk zusätzlich zur Elastizität der Aufhängelasche einem durch die Einlauf-Servowirkung bedingten Schrägverschleiss entgegen, da bei derartigem Schrägverschleiss und sich infolgedessen neigendem Bremsbelaghalter ein der Neigung entgegenwirkendes Kippmoment durch entsprechend exzentrischen Lastangriff des Bremszangenhebels bewirkt wird. Bei dieser Ausbildung der Aufhängevorrichtung ist es zweckmässig, den Bremsbelaghalter und den Bremszangenhebel mittels einer zwischen den Einzelkugelgelenken angreifenden, elastischen Spannvorrichtung gegeneinander zu verspannen.

In den Zeichnungen sind Ausführungsbeispiele für nach der Erfindung ausgebildete Aufhängevorrichtungen dargestellt, und zwar zeigt:

Fig. 1 eine erste Ausführungsform in Aufsicht,
Fig. 2 einen Schnitt gemäss Linie II/II in Fig. 1,
Fig. 3 einen Schnitt gemäss Linie III/III in Fig. 1, und
Fig. 4 eine zweite Ausführungsform;
Fig. 5 ein Bemessungsbeispiel.

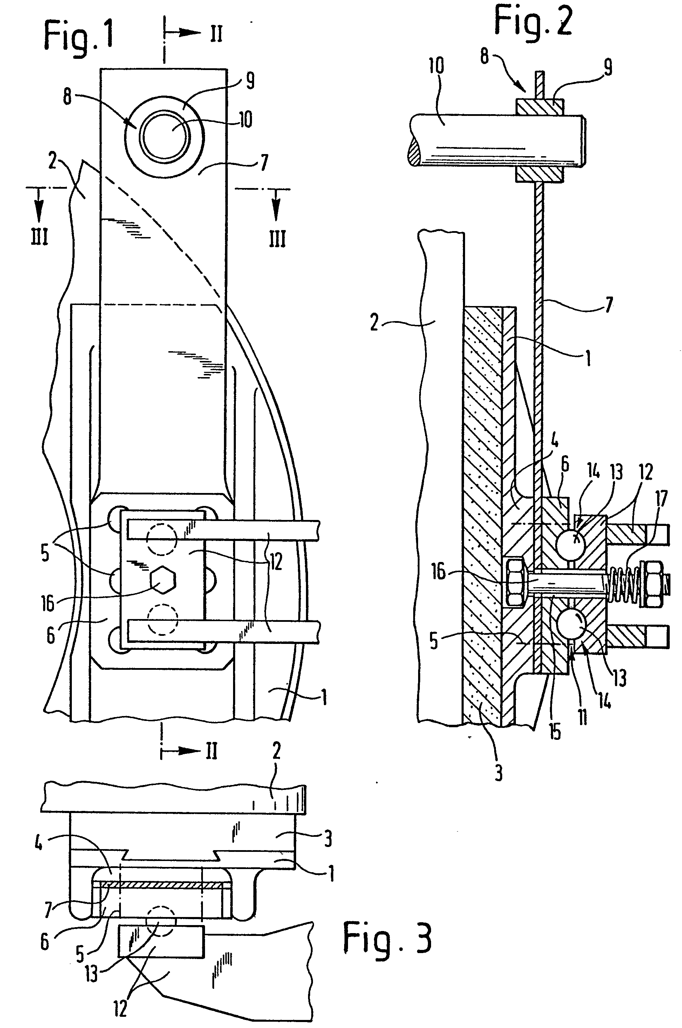

In Fig. 1 bis Fig. 3 ist ein Bremsbelaghalter 1 dargestellt, welcher einerseits einen an eine Bremsscheibe 2 anpressbaren Bremsbelag 3 trägt. Zwischen einem mittigen Tragansatz 4 des Bremsbelaghalters 1 und einem mit diesem durch Schrauben 5 verbundenen Lagerstück 6 ist ein Ende einer als Blattfeder ausgebildeten Aufhängelasche 7 starr eingespannt. Die Aufhängelasche 7 erstreckt sich etwa tangential zur Bremsscheibe 2 nach oben und ist nahe ihres oberen Endes mittels einer Schiebeführung 8 gelagert. Die Schiebeführung 8 weist eine mit der Aufhängelasche 7 verbundene Buchse 9 auf, welche mit Schiebesitz auf einem sich parallel zur Achse der Bremsscheibe 2 erstreckenden Bolzen 10 gelagert ist. Die Buchse 9 weist dabei eine Länge auf, welche wenigstens annähernd dem Durchmesser des in nicht dargestellter Weise fest, beispielsweise am Fahrzeugrahmen gehaltenen Bolzens 10 entspricht.

Das Lagerstück 6 ist über ein Doppelkugelgelenk 11 an einem sich etwa radial zur Bremsscheibe 2 erstreckenden Bremszangenhebel 12 gelagert, die Bremszange, welcher der Bremszangenhebel 12 zugehört, ist im weiteren nicht dargestellt. Das Doppelkugelgelenk 11 weist zwei in Längsrichtung der Aufhängelasche 7 zueinander versetzt angeordnete Kugeln 13 auf, deren jede in Lagerpfannen des Lagerstückes 6 und des Bremszangenhebels 12 gelagert ist und somit ein Einzelkugelgelenk 14 bildet. Durch fluchtende Bohrungen 15 vom Lagerstück 6 und Bremszangenhebel 12 ragt ein als Zuganker dienender Bolzen 16, der einerseits am Tragansatz 4 verankert ist und zwischen dessen anderem Ende und dem Bremszangenhebel 12 eine Feder 17 eingespannt ist.

Andererseits der Bremsscheibe 2 befindet sich eine zu Fig. 1 bis Fig. 3 gleichartig ausgebildete, nicht dargestellte Aufhängevorrichtung für einen weiteren Bremsbelaghalter mit einem gegenüberliegend zum Bremsbelag 3 an die Bremsscheibe 2 anpressbaren Bremsbelag.

Bei gelöster Bremse befindet sich der Bremsbelag 3 in einem geringen, dem Lösehub entsprechenden Abstand vor der Bremsscheibe 2. Die Blattfeder der Aufhängelasche 7 ist dabei entspannt, d.h. elastisch nicht verformt.

Zum Bremsen wird das dargestellte Ende des Bremszangenhebels 12 in Richtung zur Bremsscheibe 2 bewegt, wobei es über das über beide Kugeln 13 tragende Doppelkugelgelenk 11, das Lagerstück 6 und den Tragansatz 4, den Bremsbelaghalter 1 mitnimmt und den Bremsbelag 3 an die Bremsscheibe 2 drückt. Die Blattfeder der Aufhängelasche 7 wird dabei in Richtung zur Bremsscheibe 2 hin elastisch durchgebogen, wobei sie ein Kippmoment auf die Buchse 9 um eine zum Bolzen 10 senkrechte Achse ausübt. Die Buchse 9 verklemmt sich infolge dieses Kippmomentes auf dem Bolzen 10 und behält infolge dieser Verklemmung ihre augenblickliche Lage bei.

Tritt während des Bremsvorganges ein Verschleiss des Bremsbelages 3 auf, so nähert sich der Bremsbelaghalter 1 entsprechend der Bremsscheibe 2, wobei die Aufhängelasche 7 demVerschleiss entsprechend weiter elastisch verformt wird.

Beim Lösen der Bremse — ohne vorangehenden Bremsbelag-Verschleiss — kehrt der Bremszangenhebel 12 in seine Ausgangslage zurück, wobei er über die Feder 17 und den Zuganker (Bolzen) 16, unterstützt durch die Eigenspannung der Aufhängelasche 7, den Bremsbelaghalter 1 unter Abheben des Bremsbelages 3 von der Bremsscheibe 2 mitnimmt. Die Aufhängelasche 7 kehrt dabei in ihre unverformte Ausgangsstellung zurück. Falls während der vorangehenden Bremsung ein Verschleiss des Bremsbelages 3 aufgetreten ist, welcher die Verschleissnachstellvorrichtung zum Ansprechen bringt, kehrt während des Lösevorganges der Bremszangenhebel 12 nicht völlig in seine Ausgangslage zurück, sondern bleibt um einen der Verschleissnachstellung entsprechenden Abstand vor dieser Ausgangsstellung stehen. Der Bremsbelaghalter 1 hebt dabei den Bremsbelag 3 um das Sollösespiel von der Bremsscheibe 2 ab, kehrt jedoch nicht vollständig in seine Ausgangslage zurück. Die Aufhängelasche 7 bleibt anfangs auch in der Lösestellung geringfügig elastisch verformt. Während nachfolgenden Erschütterungen, welche beispielsweise durch Fahrstösse bedingt sein können, löst sich jeweils kurzzeitig die Verklemmung der Buchse 9 auf dem Bolzen 10, so dass sich unter der elastischen Verformungsspannung der Aufhängelasche 7 die Buchse 9 auf dem Bolzen 10 gemäss Fig. 2 nach links, zur Bremsscheibe 2 hin verschiebt, bis die Aufhängelasche 7 wieder völlig entspannt und unverformt ist.

Mittels der Schiebeführung 8 ergibt sich also eine selbsttätige Nachstellung der Anlenkung der Aufhängelasche 7 am ein festes Halteteil darstellenden Bolzen 10, derart, dass während Bremsungen die Aufhängelasche 7 stets nur geringfügig aus ihrer Ruhelage verformt werden muss, der Bremsbelaghalter 1 somit keine Höhenveränderungen erfährt. Auch bei einem seitlichen Versatz der Bremsscheibe 2 aus ihrer Sollage erfährt die Halterung der Aufhängelasche 7 am Bolzen 10 über die Schiebeführung 8 eine entsprechende Nachstellung, so dass bei gelösten Bremsen der Bremsbelag 8 sich bei entspannter Aufhängelasche 7 mit dem Lösesollhub entsprechendem Abstand vor der Bremsscheibe 2 befindet. Die beidseitig der Bremsscheibe 2 befindlichen Bremsbelaghalter 1 werden somit stets auf gleicher Höhe geführt, die dem Bremshebel 12 zugehörende Bremszange erfährt keine Verwindung und die Bremsscheibe 2 bleibt von Biegebeanspruchungen frei. Zugleich gewährleistet die als Blattfeder ausgebildete Aufhängelasche 7 eine Führung des Bremsbelaghalters 1 parallel zur Ebene der Bremsscheibe 2, wodurch einem Schrägverschleiss des Bremsbelages 3 sowohl in Umfangsrichtung wie in Radialrichtung der Bremsscheibe 2 gesehen entgegengewirkt wird.

Das Doppelkugelgelenk 11 lenkt den Bremszangenhebel 12 um eine parallel zur Längsrichtung der Aufhängelasche 7 verlaufende Drehachse frei drehbar am Bremsbelaghalter 1 an, durch die Zangenbewegung des Bremszangenhebels 12 wird somit kein Drehmoment um eine zur Längsrichtung der Aufhängelasche 7 parallele Drehachse auf den Bremsbelaghalter 1 übertragen. Sollte jedoch einlaufseitig durch die Servowirkung am Bremsbelag 3 ein verstärkter Verschleiss auftreten, so beginnt der Bremsbelaghalter 1 sich um eine im wesentlichen parallel zur Längsrichtung des Bremszangenhebels 12 erstreckende Drehachse zu drehen, wodurch das entgegen der Drehrichtung liegende Einzelkugelgelenk 14 entsprechend stärker, das andere Einzelkugelgelenk dagegen entsprechend schwächer von der vom Bremszangenhebel 12 auf den Bremsbelaghalter 1 zu übertragenden Bremskraft belastet wird. Es ergibt sich hierdurch eine Verlagerung der resultierenden Angriffsstelle des Bremszangenhebels 12 am Bremsbelaghalter 1, welche der Schrägstellung des Bremsbelaghalters 1 entgegenwirkt, das den grösseren Verschleiss aufweisende Ende des Bremsbelages 3 entlastet und das entgegengesetzte Bremsbelag-Ende entsprechend zusätzlich belastet. Dem in Umfangsrichtung verlaufenden Schrägverschleiss des Bremsbelages 3 wird somit sowohl durch die Eigenspannung der Aufhängelasche 7 wie auch durch Verlagerung der Bremskraft-Einleitungsstelle entgegengewirkt.

Bei Schiefstellung der Bremsscheibe 2 vermag sich der Bremsbelaghalter 1 der jeweiligen Scheibenstellung unter entsprechender Ausnutzung der Elastizität der Blattfeder der Aufhängelasche 7 und entsprechender Auslenkung des Doppelkugelgelenkes 11 ohne Zwängung anzupassen.

Die vorstehend beschriebene Aufhängevorrichtung weist also die Vorteile auf, dass praktisch keine Zwangskräfte in der dem Bremszangenhebel 12 zugehörenden Bremszange bei Schiefstellung oder Seitenversatz der Bremsscheibe 2 auftreten, dass nur wenige Gelenke erforderlich sind, wodurch der Erstellungsaufwand gering ist, dass aufgrund der wenigen Gelenke und im Hinblick auf die gegenseitige Verspannung von Bremszangenhebel 12 und Bremsbelaghalter 1 vermittels Feder 17 kein Klappern und nur geringer Verschleiss auftritt, dass durch weitgehende Trennung von Bremszangen- und Backenkinematik eine einfache Bauweise der Bremszange möglich ist, dass der Bremsbelag-Schrägverschleiss in beiden Richtungen verhindert bzw. wirksam reduziert wird, dass eine sehr flache und damit raumsparende Bauweise des Bremsbelaghalters möglich ist und dass der Bremsbelaghalter nur einer sehr einfachen Bearbeitung bedarf und somit in der Herstellung billig ist.

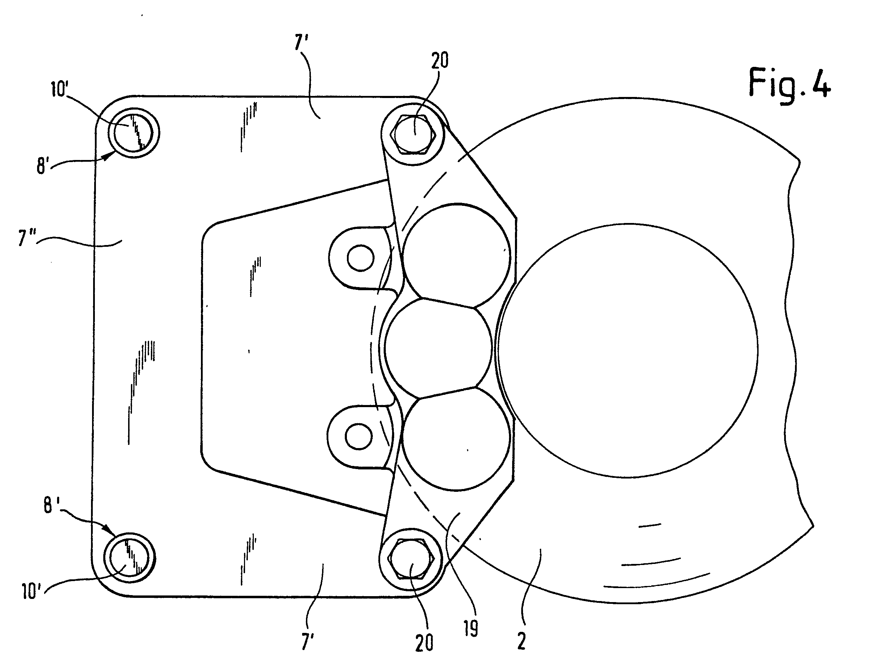

Die Aufhängevorrichtung ist nicht nur bei Zangenbremsen gemäss vorstehend beschriebenem Beispiel, sondern auch bei Scheibenbremsen mit unstarrem Bremssattel verwendbar. In Fig. 4 ist ein verschieblicher Bremssattel 19 dargestellt, welcher die Bremsscheibe 2 übergreift. Zur Halterung des Bremssattels 19 sind an dessen beiden Enden aus Blattfedern gebilde Aufhängelaschen 7', die sich etwa radial zur Bremsscheibe 2 erstrecken und mittels einer Lasche 7'' miteinander verbunden sein können, mittels Schrauben 20 fest angeordnet. Die Hängelaschen 7' sind andererseits über eine Schiebeführung 8', welche in ihrem Aufbau der Schiebeführung 8 nach Fig. 1 und 2 entspricht, an feste Halteteile darstellenden Bolzen 10' gelagert. Die Bolzen 10' verlaufen parallel zur Achse der Bremsscheibe 2. Die Schiebeführungen 8' erlauben, wie beim Ausführungsbeispiel nach Fig. 1 bis 3 die Schiebeführung 8, bei gelösten Bremsen unter dynamischen Krafteinflüssen eine Einstellung des Bremssattels 19 in eine mittige Ruhestellung zur Bremsscheibe 2. Bei Bremsungen wird der Bremssattel 19 zum Anpressen des mit ihm verbundenen, nicht dargestellten Bremsbelages an die Bremsscheibe 2 unter elastischer Verformung der Aufhängelaschen 7' seitlich versetzt; die Funktion der Aufhängelaschen 7' entspricht also völlig der Funktion der Aufhängelaschen 7 und braucht daher nicht weiter im einzelnen beschrieben zu werden.

In Abänderung zu den vorstehend beschriebenen Ausführungsbeispielen ist es auch möglich, die Anordnung der festen Einspannung und der Schiebeführung an den Aufhängelaschen 7 und 7' zu vertauschen, derart, dass sich die Schiebeführungen 8 bzw. 8' an der Verbindungsstelle von Aufhängelasche 7 zu Bremsbelaghalter 1 bzw. Aufhängelasche 7' zu Bremssattel 19 und die starre Einspannung der Aufhängelaschen 7 bzw. 7' jeweils bei deren Halterung am festen Halteteil befinden. Bei allen Ausführungsformen wird das Bremsmoment vom Bremsbelaghalter 1 bzw. vom Bremssattel 19 über die Aufhängelaschen 7 bzw. 7' zum festen Halteteil, den Bolzen 10 bzw. 10', übertragen.

In Abänderung zu den vorstehend beschriebenen Ausführungsbeispielen ist es bei guter Führung des Bremszangenhebels 12 auch möglich, anstelle des Doppelkugelgelenkes 11 ein einfaches, allseitig bewegliches Gelenk, insbesondere Kugelgelenk vorzusehen. Die Kugel eines derartigen Gelenkes wäre zentral anzuordnen, so dass ihr Mittelpunkt auf der Achse des dabei entfallenden oder seitlich versetzt neu anzuordnenden Bolzens 16 zu liegen käme.

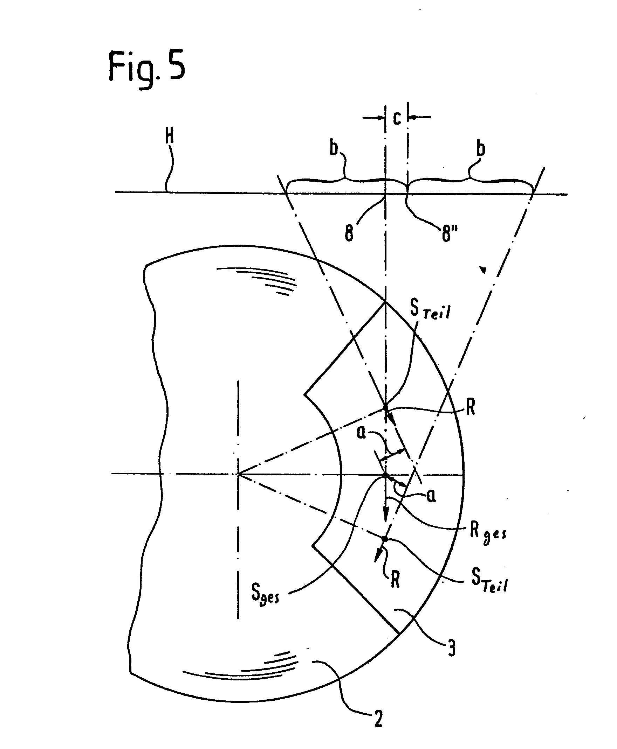

Erfolgt die Aufhängung des Bremsbelaghalters 1 nach Fig. 1 mittels der Aufhängelasche 7 in tangentialer Richtung zum theoretischen Reibradius auf der Bremsscheibe 2, so erfährt der Bremsbelaghalter aufgrund der endlichen Ausdehnung des Bremsbelages 3 ein Drehmoment um eine Achse, die parallel zur Bremsscheibenachse verläuft. Bei pendelnder Aufhängung des Bremsbelaghalters muss dieses Drehmoment durch eine zusätzliche Kraft kompensiert werden, die insbesondere den Bremszangenhebel 12 belastet. Um sowohl den Bremszangenhebel 12 als auch das Gelenk zwischen diesem und dem Bremsbelaghalter 1 frei von dieser Zusatzkraft zu halten, wird in Abänderung der Anordnung nach Fig. 1 die Aufhängelasche 7 nicht mit tangential zur Bremsscheibe 2, sondern hierzu geneigt verlaufender Längsrichtung angeordnet, derart, dass sich die Schiebeführung 8 mit der Buchse 9 und dem Bolzen 10 im Vergleich zu Fig. 1 waagrecht nach rechts versetzt befindet, also einen grösseren Abstand zur Bremsscheibe 2 aufweist. Das Mass dieser Versetzung lässt sich wie folgt ermitteln: Der Bremsbelag 3 nach Fig. 5 wird gedanklich in zwei symmetrische Hälften — entlang der waagrechten Radiuslinie der Bremsscheibe 2 — geteilt. Die Anpresskraft wirkt dann nicht mehr im Gesamtschwerpunkt $S_{ges}$, sondern zu gleichen Teilen in den Schwerpunkten $S_{Teil}$ der Belaghälften auf diese ein und bewirkt dementsprechend anstelle der Gesamtreibkraft $R_{ges}$ des ganzen Bremsbelages 3 nur Teilreibkräfte R, wobei die Reibkräfte $R_{ges}$ bzw. R jeweils senkrecht zum durch den jeweiligen Schwerpunkt $S_{ges}$ bzw. $S_{Teil}$ gehenden Bremsscheibenradius verlaufen. Aus Fig. 5 ist ersichtlich, dass die Teilreibkräfte R jeweils im Abstand a vom Gesamtschwerpunkt $S_{ges}$ verlaufen und somit ein Drehmoment auf den Bremsbelag 3 ausüben. Bei einer Aufhängung des Bremsbelaghalters 1 mittels der Aufhängelasche 7 senkrecht über dem Gesamtschwerpunkt $S_{ges}$, wie es in Fig. 1 mit der Schiebeführung 8 dargestellt ist, wobei die Aufhängelasche 7 senkrecht zum den Schwerpunkt $S_{ges}$ schneidenden Bremsscheibenradius verläuft, muss das Drehmoment in gesonderter Weise aufgenommen werden. Wird aber gemäss Fig. 5 die obere Lagerung der Aufhängelasche 7 um die Strecke c derart nach rechts versetzt, dass sich die neue Lagerstelle — Schiebeführung 8'' — mittig zwischen den Schnittpunkten der Verlängerungen der Teilreibkräfte R mit einer Horizontalen H durch die obere Lagerstelle, also im Abstand b zu diesen Schnittpunkten befindet, so bewirkt die Gesamtreibkraft $R_{ges}$ am Hebelarm c ein das Drehmoment kompensierendes Gegendrehmoment. Es gilt dabei die Beziehung, dass das Drehmoment M gleich dem doppelten Produkt aus der Teilreibkraft R mit dem Abstand a ist und dem Produkt aus der Gesamtreibkraft $R_{ges}$ mit der Strecke c entspricht:

$$M = R \cdot a + R \cdot a = R_{ges} \cdot c$$

Diese Kompensation des Drehmomentes entlastet insbesondere den Bremszangenhebel 12 und dessen Lagerungen von einer ansonsten üblichen Zusatzbelastung.

**Patentansprüche**

1. Aufhängevorrichtung für betätigungs- und verschleissabhängig bewegliche Teile, insbesondere Bremsbelaghalter und unstarre Bremssättel, von insbesondere an Schienenfahrzeugen angeordneten, eine Verschleissnachstellvorrichtung aufweisenden Scheibenbremsen, mit wenigstens einer sich vom beweglichen Teil zu einem festen Halteteil erstreckenden Aufhängelasche (7, 7'), wobei die in Bewegungsrichtung des beweglichen Teiles (Bremsbelaghalter 1, Bremssattel 19) elastisch verformbare Aufhängelasche (7, 7') an ihrem einen Ende am beweglichen Teil (1, 19) oder dem Halteteil (Bolzen 10, 10') starr befestigt ist, dadurch gekennzeichnet, dass die Aufhängelasche (7, 7') an ihrem anderen Ende am jeweils anderen Teil — dem Halteteil (10, 10') oder dem beweglichen Teil (1, 19) — mittels einer parallel zur Bewegungsrichtung verlaufenden Schiebeführung (8, 8') gehaltert ist, wobei die Schiebeführung unter Kippmomentbelastung selbstsperrend ausgebildet ist.

2. Aufhängevorrichtung nach Anspruch 1, dadurch gekennzeichnet, dass die Schiebeführung (8) als auf einem zylindrischen, parallel zur Bewegungsrichtung des beweglichen Teiles verlaufenden Bolzen (10) verschieblich gelagerte Buchse (9) ausgebildet ist, wobei die Länge der Buchse (9) etwa dem Durchmesser des Bolzens (10) entspricht.

3. Aufhängevorrichtung für Bremsbelaghalter von mittels einer Bremszange zuspannbaren Scheibenbremsen, wobei ein Bremszangenhebel (12) über ein Gelenk (11) mit dem Bremsbelaghalter (1) verbunden ist, nach Anspruch 1, dadurch gekennzeichnet, dass die Schiebeführung (8, 8') zwischen Aufhängelasche (7, 7') und Halteteil (Bolzen 10, 10') angeordnet ist und dass das Gelenk Rotationsfreiheitsgrade zumindest um eine zur Aufhängelasche (7) und eine zum Bremszangenhebel (12) parallel verlaufende Drehachse aufweist.

4. Aufhängevorrichtung nach Anspruch 3, dadurch gekennzeichnet, dass das Gelenk als Doppelkugelgelenk (11) mit zwei in Längsrichtung der Aufhängelasches (7) zueinander versetzt angeordneten Einzelkugelgelenken (14) ausgebildet ist.

5. Aufhängevorrichtung nach Anspruch 4, dadurch gekennzeichnet, dass der Bremsbelaghalter (1) und der Bremszangenhebel (12) mittels einer zwischen den Einzelkugelgelenken (14) angreifenden, elastischen Spannvorrichtung (16, 17) gegeneinander verspannt sind.

6. Aufhängevorrichtung nach Anspruch 1, dadurch gekennzeichnet, dass die Aufhängelasche (7) eine aus der Tangentialrichtung zur Bremsscheibe (2) nach aussen, von der Bremsscheibe weggerichtete Längsrichtung aufweist.

## Claims

1. Suspension device for parts which are moveable, dependent on operation and wear, especially brake lining support and non-rigid calipers, of, in particular, disk brakes which are arranged on railcars and which show a wear adjusting-device, with at least one suspension bracket (7, 7'), extending from the moveable part to a firm holding part, in the case of which the suspension bracket (7, 7') which is elastically ductile in the direction of movement of the moveable part (brake lining support 1, caliper 19), is rigidly fixed at its one end to the moveable part (1, 19) or to the holding part (pins 10, 10'), characterised in that, the suspension bracket (7, 7') is supported at its other end on the other part — the holding part (10, 10') or the moveable part (1, 19) — respectively, by means of a sliding control (8, 8'), running parallel to the direction of movement, wherein the sliding control is developped as spin-resistant under the strain of overturning moment.

2. Suspension device according to claim 1, characterised in that, the sliding control (8) is developped as an adjustably carried box (9) on a cylindrical pin (10), running parallel to the direction of movement of the moveable part, in the case of which the length of the box (9) roughly corresponds to the diameter of the pin (10).

3. Suspension device for brake lining support of disk brakes, appliable by means of a braking clasp, wherein a braking clasp lever (12) is connected, over a link (11), with the brake lining support (1), according to claim 1, characterised in that, the sliding control (8, 8') is arranged between suspension bracket (7, 7') and holding part (pin 10, 10') and in that, the link shows degrees of rotational freedom, at least around a swivelling axis, running parallel to the suspension bracket (7) and one running parallel to the braking clasp lever (12).

4. Suspension device according to claim 3, characterised in that, the link is developed as a double ball-and-socket joint (11) with two single ball-and-socket joints (14), arranged offset in respect of each other in the longitudinal direction of the suspension bracket (7).

5. Suspension device according to claim 4, characterised in that, the brake lining support (1) and the braking clasp lever (12) are braced against each other by means of an elastic clamping device (16,17) which engages between the single ball-and-socket joints (14).

6. Suspension device according to claim 1, characterised in that, the suspension bracket (7) shows a longitudinal direction, directed away out of the tangential direction to the brake disk (2) outwards, away from the brake disk.

## Revendications

1. Dispositif de suspension pour éléments mobiles et susceptibles d'être commandés et d'être usés, en particulier supports de garnitures de freins et étriers de freins non rigides, de freins à disque disposés en particulier sur des véhicules sur rails et présentant un dispositif de rattrapage de l'usure, avec au moins une barrette de suspension (7, 7') qui s'étend d'un élément mobile à un élément de support, la barrette de suspension (7, 7') élastiquement déformable dans le sens du déplacement de l'élément mobile (support de garniture de frein 1, étrier de frein 19), étant reliée rigidement par l'une de ses extrémités à l'élément mobile (1, 19) ou à l'élément de support (boulon 10, 10'), caractérisé par le fait que la barrette de suspension (7, 7') est montée par son autre extrémité sur respectivement l'autre élément — l'élément de support (10, 10') ou l'élément mobile (1, 19) — à l'aide d'un guidage à coulissement (8, 8'), celui-ci étant réalisé à auto-blocage sous la charge d'un couple de basculement.

2. Dispositif de suspension selon la revendication 1, caractérisé par le fait que le guidage à coulissement (8) est réalisé sous la forme d'une douille (9) déplaçable sur un boulon (10) cylindrique s'étendant parallèlement à la direction du déplacement de l'élément mobile, la longueur de la douille (9) correspondant à peu près au diamètre du boulon (10).

3. Dispositif de suspension pour des supports de garnitures de freins de freins à disques serrables à l'aide d'une pince de frein, un levier de pince de frein (12) étant relié par l'intermédiaire d'une articulation (11) au support de garniture de frein (1), caractérisé par le fait que le guidage à coulissement (8, 8') est disposé entre la barrette de suspension (7, 7') et l'élément de support (boulons 10,10'), et que l'articulation possède des degrés de liberté de rotation au moins autour d'un axe de rotation qui s'étend parallèlement à la barrette de suspension (7) et d'un axe qui s'étend parallèlement au levier de pince de frein.

4. Dispositif de suspension selon la revendication 3, caractérisé par le fait que l'articulation est réalisée sous la forme d'une double articulation à billes (11), à deux articulations à billes individuelles (14), décalées entre elles dans le sens de l'extension longitudinale de la barrette de suspension (7).

5. Dispositif de suspension selon la revendication 4, caractérisé par le fait que le support de garniture de frein (1) et le levier de la pince de frein (12) sont susceptibles d'être serrés entre eux à l'aide d'un dispositif de serrage élastique (16, 17) dont le point d'attaque est situé entre les articulations à billes individuelles.

6. Dispositif de suspension selon la revendication 1, caractérisé par le fait que la barrette de suspension (7) possède une extension longitudinale décalée, à partir de la direction tangentielle par rapport au disque de frein, vers l'extérieur et s'éloignant du disque de frein.

Fig.1

Fig.2

Fig.3

Fig.4

10'
8'
7'
7"
8'
10'
7'
20
20
19
2
11
0 067 371

# Fig. 5